# EUROPEAN PATENT SPECIFICATION

(11) **EP 0 908 213 B1**
(45) Date of publication and mention of the grant of the patent: **27.10.2004**
(21) Application number: 98830580.1
(22) Date of filing: 30.09.1998
(51) Int. Cl.: B01D 29/05, B01D 29/52, B01D 29/64

(54) **Static filtration plant for liquids**
Statische Anlage zum Filtern von Flüssigkeiten
Installation statique pour la filtration des liquides

(30) Priority: 09.10.1997 IT PR970055
(43) Date of publication of application: 14.04.1999
(73) Proprietor: Allegri Geom. Primo S.r.l., 43100 Parma (IT)
(72) Inventor: Allegri, Primo, 43100 Parma (IT)
(74) Representative: Guareschi, Antonella

(56) References cited:
- EP-A- 0 274 113
- EP-A- 0 701 855
- WO-A-90/08587
- FR-A- 2 558 078
- GB-A- 2 191 109
- US-A- 4 049 406

## Description

The present invention relates to a static filtration plant for liquids.

Liquids which contain suspended waste and dirt particles occur increasingly frequently both in the industrial sector and in the public sector.

According to the current technology it is possible to construct liquid filtration plants which are based essentially on two methods of operation: the static method and dynamic method.

The present static filtration plants involve the use of filtering material, consisting for example of sand or granular materials, which is present in containers through which the liquids to be filtered must pass; this type of plant has the drawback that it must be stopped when it is required to perform both the periodic cleaning operations and periodic renewal of the filtering material; said plant stoppages for both maintenance and renewal result in a substantial increase in the running costs. Moreover, it is necessary to provide a standby plant to which the water to be filtered must be diverted, so that there is no interruption in operation.

With regard to the dynamic filtration plants, in addition to the drawbacks mentioned above, they possess those drawbacks associated with the dynamic nature of the system, with consequent high energy consumption and wear of the moving parts.

In addition to the filtration plants already mentioned, there exist known devices (disclosed for example from WO 90/08587) for counter-flow washing of the filters which are inserted in a flat-bottom tank thus divided into fluid-tight compartments.

These devices operate in tanks which are divided, by means of a filter wall, into at least two chambers, one for clean water and the other for dirty water. The liquid to be filtered is introduced into the dirty-water chamber, flows through the filter wall and is collected as purified liquid in the clean-water chamber. The filter wall normally consists of a frame over which a piece of fabric is stretched so as to collect solid substances, thus increasing the resistance of the filter.

Cleaning of the filter is performed by means of a counter-flow washing device comprising at least one column of water jets operating on the clean-water chamber side and at least one column for removing the sludge water, situated on the opposite side. In order to clean the entire filter wall, the counter-flow washing device is fixed onto a bridge displaceable along the wall of the filter itself, so that the moving parts are arranged above the surface level of the liquid, while the washing device suspended from the bridge is situated underneath the surface level of the liquid.

By operating the counter-flow washing device, the filter wall is sprayed on the clean-water side, by means of the column of water jets, with filtered liquid. On the opposite side, the solid substances washed away together with the washing water and filtered water are sucked up, by means of the column for removing the sludge water. Where several filter walls are installed parallel to one another inside the tanks, so that there are several chambers, each of the walls has a counter-flow washing device fixed onto the bridge.

This solution has numerous drawbacks as regards the actual subject-matter of the patent and as regards the plant of the known type in which it is used. In particular it consists of a filtration plant which is composed essentially of a tank divided into several fluid-tight compartments and which has the drawback, already mentioned above, of requiring stoppage thereof when it is required to perform the periodic cleaning operations.

As regards the subject-matter of the patent, namely the device for cleaning filters, first of all the assembly is fairly complex and costly because a device is necessary for each wall and, in turn, each device requires two units, one for spraying and the other for suction. Moreover the device requires an internal head for removal of the backwashing water, while the presence of a suction unit requires - in view of the low concentration of the sucked sludge - a successive compartment for thickening the sludge itself or large-volume impurities.

The object of the present invention is that of providing a static filtration plant for liquids which eliminates the abovementioned drawbacks, which has low installation and running costs, without the need for stoppage in the case of replacement of the filtering elements, and which has a greater filter washing efficiency.

Moreover, since it has a single undivided tank with a bottom having one or more hopper-type pits, denser sludge is extracted, thus reducing the volume to be conveyed away for treatment. At the same time the number of apparatus and extraction points is reduced, the sludge of several filtering walls being collected in each hopper.

Moreover, said hopper-type sludge collection and extraction system avoids the use of apparatus which necessarily make sliding contact with the filtering walls, causing an increase in the wear and therefore the more frequent need for replacement.

The presence of an undivided tank consequently results in a single liquid level in the whole tank and therefore requires only one level sensor for controlling the backwashing operations for the filtering walls.

Since it is also possible to select operation with the panels empty, placing the discharge outlet for the filtered liquid at a lower level than the bottom of the panels, the efficiency of the backwashing devices, per single jet, is maximum.

These and other objects are all achieved by the static filtration plant for liquids according to the present invention as claimed in the appended claims.

Characteristic features will emerge more clearly from the following description of a preferred embodiment illustrated purely by way of a non-limiting example, in the accompanying illustrative plate, in which:
- Figure 1 shows a plan view of the filtration plant;
- Figure 2 shows a side view of the filtration plant along the section I-I of Figure 1;
- Figure 3 shows a perspective view of a detail of the frame supporting a filtering wall;
- Figure 4 shows a perspective view of a sector;
- Figure 5 shows a front view of a filtering wall;
- Figure 6 shows a plan view of that shown in Figure 5.

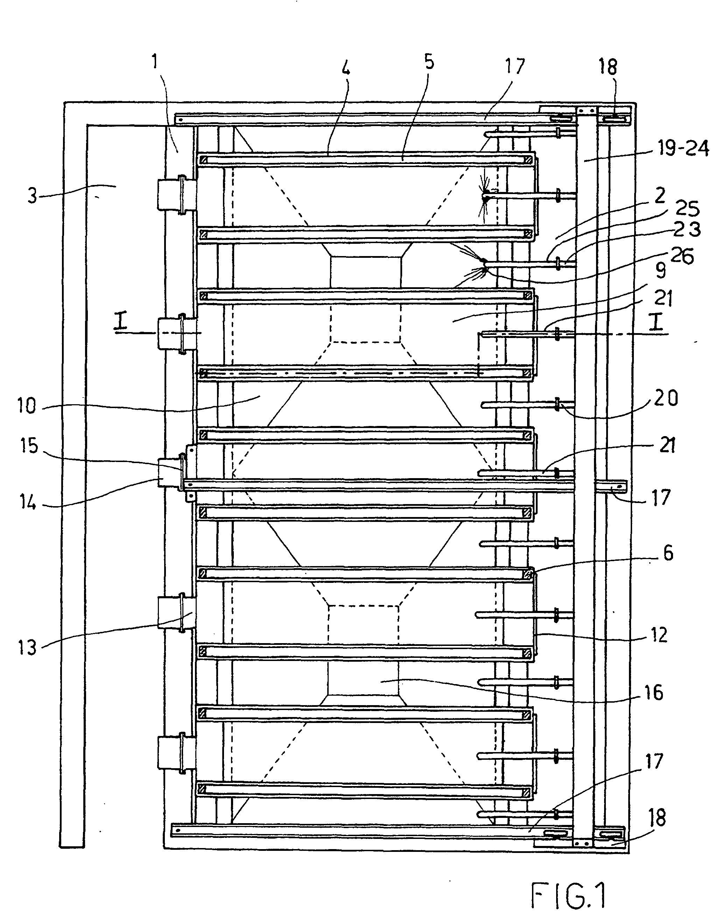

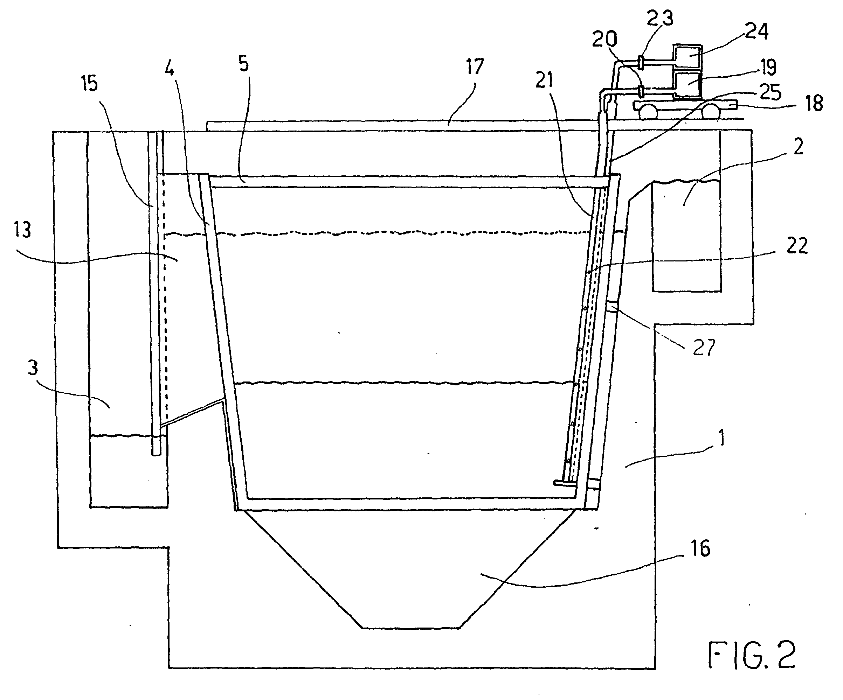

With reference to Figures 1 and 2, 1 denotes a tank with a substantially parallelepiped shape inside which filtering elements, described more fully below, are inserted.

In the example shown, each of the two opposite sides of the tank 1 is provided with a channel parallel to the side itself.

Said two channels are staggered heightwise with respect to one another; the channel 2, for supplying the liquid to be clarified, is higher than the channel 3 for removal of the clarified liquid.

A plurality of frames 4, which are all parallel with one another and vertically positioned, are fixed transversely to the internal surfaces of two opposite walls of the said tank, being separated therefrom by means of spacers 27.

In a constructional variant not shown, the channel 3 may be arranged on the opposite side and discharging of the filtered liquid may occur via pipes located on the bottom of the frames and connected to the channel 3.

Each of the said frames is overall in the form of a "U" which is open upwards and with the two substantially vertical sides being fixed to the said internal walls; each frame 4 has a cross-section which is also in the form of a "U" with the open side directed towards the inside of the frame itself.

Each of the said frames forms a support for the filtering wall 5 mounted on the respective frame 4 by means of engagement, from above, inside the U-shaped cross-section of the frame itself.

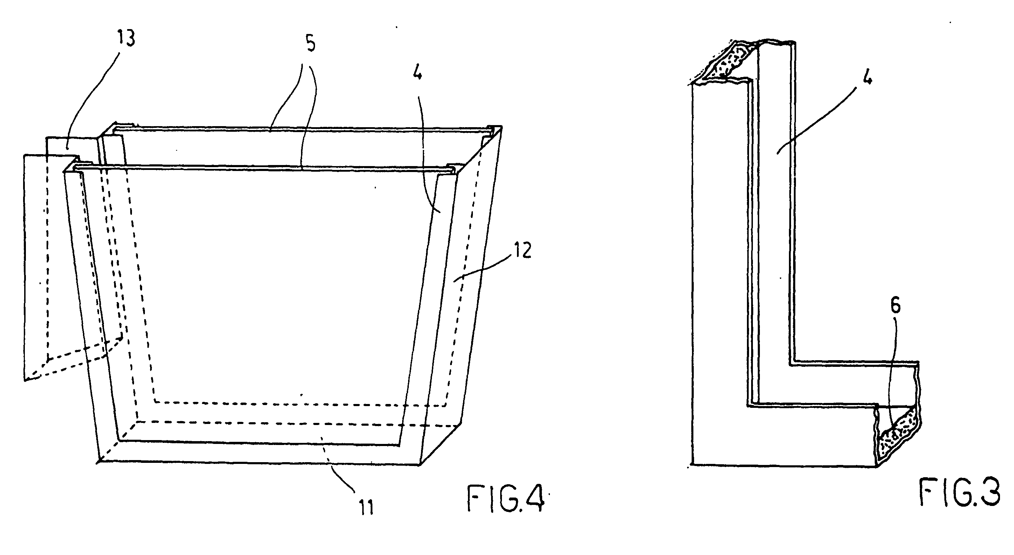

As shown in Figure 3, the bottom of said cross-section is lined with a seal 6 suitable for forming a sealing element between the bottom itself and the side and bottom edges of the associated filtering wall 5. By way of alternative to the solution shown, the seal could also be fitted onto the edges of the walls.

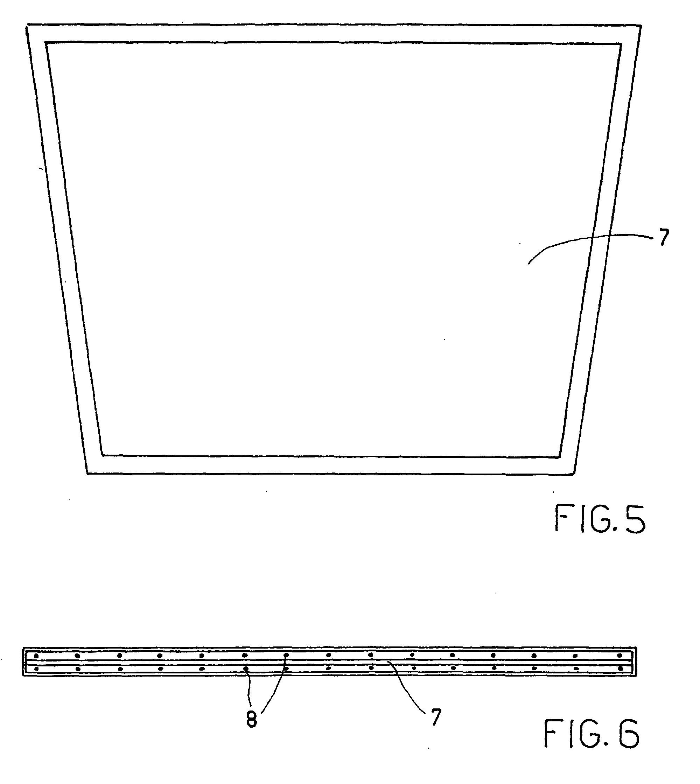

Each of said walls is formed by one or more filtering screens 7 and by a reticular support structure 8 as can be seen from the plan view shown in Figure 6; said screens consist of material which is suitable for filtration such as, for example, cloth or fabric which is nonwoven or in any case has a low permeability, and may advantageously have a varied porosity in the vertical direction.

Positioning of the frames 4 inside the tank 1 divides the internal volume thereof alternately into sectors 9 for filtered liquid and sectors 10 for liquid to be filtered.

Each of the sectors 9 is in the form of a compartment closed at the bottom by a blind base 11 and laterally by a blind side 12 and by two adjacent filtering walls 5.

The blind elements mentioned above connect the frames 4 of the said adjacent filtering walls.

In each of the sectors 9 the side which is located opposite the blind side 12 has an opening 13 which extends downwards until it reaches a level slightly higher than that of the bottom of the channel 3.

Each opening 13 is situated opposite a discharge outlet 14, which is present on one side of the tank 1 and provided with a sluice-valve 15, said discharge outlet being connected to the channel 3.

Each of the sectors 10, on the other hand, is open towards the bottom of the tank 1 where one or more pits are formed, each of said pits being provided with a system for removal of the impurities deposited, said system not being shown in the Figures.

One or more guides 17 which are rectilinear and parallel with one another and the plurality of frames 4 are positioned above the tank 1.

A corresponding number of carriages 18 supporting two ducts 19 and 24 which extend parallel to the tank 1 over the entire length of the side thereof, perpendicular to the plurality of frames 4, is located above the said guides.

A plurality of unions 20 and 23 is fixed to each of the ducts 19 and 24, respectively, said plurality corresponding, in terms of both number and position, to that of the sectors 9 and the sectors 10.

The unions corresponding to the sectors 9 containing the filtered liquid have, connected to them, a corresponding number of pipes 21 directed towards the bottom of the tank 1 and having a length substantially equivalent to the depth of the frames 4; each of the said pipes has, along its entire length, a plurality of radial nozzles 22 which are all directed towards the filtering walls 5 substantially perpendicularly with respect thereto. Corresponding pipes 25 are connected to unions 23 supplied by the duct 24 and descending into the sectors 10. The pipes 25 contain nozzles 26 with the jet directed so as to be inclined with respect to the filtering wall.

The horizontal travel movement of the backwashing devices is performed using a pneumatic system, not shown in the Figures. This allows the speed thereof to be regulated at any moment in accordance with the individual requirements by simply metering the quantity of air supplied.

Alternatively, an electric or other type of moving system, which also offers the same possibilities for regulation, could be provided.

Operation of the static filtration plant for liquids according to the present invention will now be described in connection with the reference numbers shown in the Figures. The liquid containing impurities is made to flow into the channel 2 and from here passes into the sectors 10 present inside the tank 1.

Since the channel 3 for discharging the clarified liquid is situated at a lower height than the supply channel 2, the liquid to be filtered, present inside the sectors 10, after rising up over a certain distance along all the filtering walls 5, starts to pass through, being freed of the suspended impurities.

Part of the impurities remains trapped in the meshes of the filtering screens 7, while most of it is gradually deposited inside the pits 16 present at the bottom of the tank 1.

At the same time, clarified liquid starts to fill the inside of the sectors 9; it is unable to mix with the liquid which is still dirty firstly because each of the sectors 9 is delimited by the blind bottom 11 and by the blind side 12 and also because the negative pressure existing throughout the hydraulic circuit and produced by the difference in level between the channels 2 and 3 prevents the liquid from flowing back through the filtering walls 5. When the level eventually covers about 90% of the filtering walls, despite the washing operations performed by means of the jets emitted by the nozzles, it will be necessary to extract in pairs the filtering walls forming a single sector 9 and replace them with other clean ones.

Since the structure is provided with a plurality of frames 4, inside each of which two filtering walls 5 are inserted, the number of frames 4 must be that necessary for containing the quantities of filtering walls 5 which are required in each specific case, plus at least one extra frame.

The latter must be of the type with a closed (non-operational) discharge outlet without filtering walls which will be installed only when it is required to perform extraordinary maintenance, replacing the filtering walls in each frame one at a time.

The last frame will be left without filtering walls and with the discharge outlet closed, ready for any future extraordinary maintenance which may be required.

Using the method, which is possible only in a static plant, three important results are achieved:
- continuity of operation due to no stoppage of the plant in order to perform extraordinary maintenance;
- the uniform quantity of filtering area during operation, thus avoiding overloads thereon;
- unlike all the other filtration systems of both a static nature and dynamic nature, the system in question does not require a standby apparatus to which the liquid to be filtered is transferred when it is required to perform extraordinary maintenance and, in particular when there are large throughputs to be treated, does not need to be split up into several plants, one of which must always be a standby plant.

In fact, by closing the opening 13, during the extraordinary maintenance operation, the invention allows operation without interruption, preventing, at the same time, the discharge of unclarified liquid. By proceeding in this manner for all the compartments, operation is never interrupted, thus avoiding having to have a standby plant available. The filtered liquid is able to flow into the discharge channel 3 through the opening 13 present on one of the sides of each sector 9 and the corresponding discharge outlet 14 formed on the edge of the tank.

When it is desired or required to replace the filtering walls 5 of each of the sectors 9, this operation may be performed easily and without stopping the plant; it is necessary to close the sluice-valves 15 present in the discharge outlets 14 corresponding to the sectors 9 where said operation is to be performed, so as to prevent any mixing between the liquid to be filtered and the liquid already clarified, and then extract the filtering walls 5 to be replaced by pulling them upwards.

As regards the periodic removal of the sludge which has collected on the bottom of the pits 16, an extraction system with which the plant is provided will cyclically start to operate.

When it is required to perform cleaning of the filtering elements, liquid is supplied to the ducts 19 and/or 24; this washing liquid flows, through the unions 20 and/or 23, to the corresponding pipes 21 and/or 25 connected to them and flows out through the nozzles 22 and/or 26 which are all directed towards the filtering walls 5.

Since the assembly consisting of the ducts 19 and 24 and the pipes 21 and 25 suspended from them are supported by the carriages 18, by displacing the latter along the guides 17 continuously or at programmed intervals, the spray of the washing liquid is made to cover the whole length of the filtering walls 5. The nozzles 22, which operate in a counterflow manner, are directed substantially with the jet perpendicular to the filtering walls, while the nozzles 26 have the co-flowing jet inclined with respect to the filtering wall so as to dislodge the debris.

The washing operation described may be performed both from inside the sectors 9 (counterflow) and from inside the sectors 10 (co-flow) and in both directions; it is sufficient to connect the pipes 21 and 25 to the unions positioned opposite one or other group of sectors. Provision of the washing water may be performed by means of connection to the water supply network or by drawing upon the clarified liquid.

In the above description specific reference has been made to the fact that the frames 4 are parallel with one another, but it is obvious that they could also be positioned in a different manner such as, for example, converging towards one another in pairs.

Reference has also been made to the fact that all the said frames are positioned vertically, but it is obvious that they could also be positioned inclined with respect to a vertical plane so as to be able to meet particular requirements of the filtration plant. The inclination of the frames and hence the filtering walls is chosen depending on the concentration and the specific weight of the sludge to be treated.

The filtering walls 5 may also have different geometric forms so as to be able to adapt to particular requirements of the plant such as, for example, dimensions, hydraulic and filtration characteristics; however, whatever the geometric form of the said walls, it must be symmetrical with respect to the central vertical axis of the walls themselves.

According to a possible variation of embodiment, the tank 1 could be made entirely from sheet metal and, in this case, the channels 2 and 3 would be replaced by a corresponding number of ducts which are staggered identically with respect to one another heightwise and function in an identical manner. Discharging of the clarified liquid may also be performed from the bottom by means of interconnection with one or more ducts connected to a header channel.

## Claims

1. Static filtration plant for liquids, comprising:
- a tank (1) provided with a first channel (2) for supplying the liquid to be purified and a second channel (3) for removing the purified liquid, said two channels being situated at different sides of the tank on two different levels, the first channel (2) being at a higher level than the second channel (3);
- the tank is divided into a plurality of first and second sectors (9,10) wherein each of the first sectors (9) is formed by frames (4) positioned transversely between the internal surfaces of two opposite walls of the tank (1) and remaining separated from the latter by means of spacers (27), by two adjacent filtering walls (5) each mounted in a frame and by blind wall elements, the interior of the first sectors (9) containing the clarified liquid are connected to channel (3) for discharging the clarified liquid by openings (13) provided with a sluice-valve (15), the second sectors (10) are connected to the supplying channel (2) for supplying the liquid to be purified to the filtering walls,
- two or more rectilinear guides (17) which are parallel with one another and connect the upper edges of two opposite sides of the tank (1), said guides being suitable for displacement of two ducts (19 and 24) fixed to carriages (18) travelling on the guides themselves;
- a plurality of pipes (21, 25) which are connected to said ducts (19, 24), each of said pipes being directed towards the bottom of the filtering walls (5) and the tank (1) and having a length substantially equivalent to the depth of the frames (4), each of said pipes having along its entire extension a plurality of nozzles (22, 26) for directing washing liquid towards the filtering walls;
- one ore more pits (16) of the hopper or rectilinear type positioned at the bottom of the tank (1) underneath the frames (4) and intended to collect the impurities; said pits being each provided with a system for removal of said impurities.

2. Static filtration plant for liquids according to Claim 1, **characterized in that** each frame (4) is substantially in the form of a "U" which is open upwards with the two substantially vertical sides fixed to the internal surface of two internal and opposite walls of the tank (1) by means of a supporting structure arranged in between; each of said frames having a cross-section also in the form of a "U" with the open side directed upwards.

3. Static filtration plant for liquids according to Claims 1 and 2, **characterized in that** each of the filtering walls (5) is mounted on the associated frame (4) by means of engagement into the U-shaped cross-section thereof; each of said walls being formed by one or more filtering screens (7) and by one or more reticular structures (8) for supporting the screens themselves.

4. Static filtration plant for liquids according to Claims 1, 2 and 3, **characterized in that** the bottom and the sides of the U-shaped cross-section of each frame (4) is lined with a seal (6) which is designed to ensure a sealing action between the said bottom and the side and bottom edges of the respective filtering wall (5).

5. Static filtration plant for liquids according to Claim 1, **characterized in that** each of the filtration sectors (9) intended to contain the clarified liquid is configured in the form of a compartment closed at the bottom by a blind base (11) and laterally by a blind side (12) and by two adjacent filtering walls (5), the said blind elements forming a connection between the frames (4) of the said adjacent filtering walls.

6. Static filtration plant for liquids according to Claims 1 and 5, **characterized in that**, in each of the filtration sectors (9), the side opposite to the blind side (12) has an opening (13) extending downwards as far as a level slightly higher than that of the bottom of the channel (3) or as far as the bottom itself and connected thereto by means of a discharge outlet (14) provided with a sluice-valve (15).

7. Static filtration plant for liquid according to Claims 1 and 6, **characterized in that** discharging of the filtered liquid may be performed by means of pipes located on the bottom of the frames and connected to the channel (3).

8. Static filtration plant for liquid according to Claims 1 and 6, **characterized in that** each sluice-valve (15) is able to be closed individually if it is required to remove the filtering walls (5) of the corresponding filtration sector (9), without having to stop the whole plant and thereby preventing not yet clarified liquid from flowing into the channel (3) on account of the said removal.

9. Static filtration plant for liquid according to Claim 1, **characterized in that** each of the sectors (10) intended to contain the liquid to be clarified is open towards the bottom of the tank (11), allowing the sludge to precipitate onto the bottom.

10. Static filtration plant for liquid according to Claim 1, **characterized in that** each column of radial nozzles (21) and (22) acts simultaneously on two filtering walls (5), spraying washing liquid against the two walls themselves, said washing being able to be performed both internally and externally and in both the directions at the same time.

11. Static filtration plant for liquid according to Claim 1, **characterized in that** it comprises a plurality of frames (4) depending on the number of filtering walls (5) which are required and at least one extra frame (4) for allowing replacement and cleaning.

12. Static filtration plant for liquids according to one or more of the preceding claims, **characterized in that** the said frames (4) may be positioned in any manner with respect to one another, both parallel and varyingly converging in pairs.

13. Static filtration plant for liquids according to one or more of the preceding claims, **characterized in that** the frames (4) may be varyingly positioned relative to a vertical plane; they may therefore be positioned both vertically and inclined.

14. Static filtration plant for liquids according to one or more of the preceding claims, **characterized in that** the tank (1) may be made both of masonrywork and sheet metal; in the latter case the channels (2) and (3) will be replaced by ducts which will also be made of sheet metal, being identically staggered heightwise with respect to one another and functioning in an identical manner.

15. Static filtration plant for liquid according to Claim 3, **characterized in that** each of the filtering walls has a varied porosity in the vertical direction or with respect to one another in order to optimize therefore the porosity itself.

16. Static filtration plant for liquid according to Claim 4, **characterized in that** each filtering wall is lined with a seal (6) designed to ensure a sealing action against the respective frame.

17. Static filtration plant for liquid according to Claim 1, **characterized in that** it comprises at least one level sensor for controlling the backwashing operations, suitable for detecting the single level of liquid present in the undivided tank (1).

## Patentansprüche

1. Statische Filtrieranlage für Flüssigkeiten, aufweisend:
- Einen Tank (1), der mit einem ersten Kanal (2) zur Einspeisung der zu reinigenden Flüssigkeit und einem zweiten Kanal (3) zur Entfernung der gereinigten Flüssigkeit ausgestattet ist, wobei die beiden Kanäle an unterschiedlichen Seiten des Tanks auf zwei unterschiedlichen Niveaus angeordnet sind, wobei der erste Kanal (2) auf einem höheren Niveau als der zweite Kanal (3) angeordnet ist,
- dass der Tank in mehrere erste und zweite Sektoren (9,10) aufgeteilt ist, wobei jeder erste Sektor (9) durch Rahmen (4), die quer zwischen den Innenflächen der beiden einander gegenüberliegenden Wände des Tanks (1) angeordnet sind und mit Hilfe von Abstandshaltern (27) von diesem getrennt sind, durch zwei benachbarte Filterwände (5), die jeweils in einen Rahmen montiert sind und durch Blindwandelemente, gebildet wird, wobei das Innere des ersten Sektors (9), das die geklärte Flüssigkeit enthält, mit dem Kanal (3) zur Abgabe der geklärten Flüssigkeit durch Öffnungen (13), die mit Schiebern (15) versehen sind, verbunden ist, die zweiten Sektoren (10) mit dem Zuführkanal (2) zur Zuführung der zu reinigenden Flüssigkeit zu den Filterwänden verbunden ist,
- zwei oder mehr geradlinige Führungen (17), die parallel zueinander stehen und die Oberkanten der beiden einander gegenüberliegenden Seiten des Tanks (1) miteinander verbinden, wobei die Führungen dazu dienen, zwei Leitungen (19 und 24), die an Wagen (18) befestigt sind, welche auf den Führungen laufen, zu verschieben,
- mehrere Rohre (21,25), die an die Leitungen (19,24) angeschlossen sind, wobei jedes Rohr auf den Boden der Filterwände (5) und dem Tank (1) gerichtet ist und eine Länge aufweist, die im wesentlichen der Tiefe der Rahmen (4) entspricht, wobei jedes Rohr über seine gesamte Länge mehrere Düsen (22,26) aufweist, um die Waschflüssigkeit auf die Filterwände zu richten,
- eine oder mehrere Vertiefungen (16) eines Trichteroder geradlinigen Typs, der am Boden des Tanks (1) unter den Rahmen (4) vorgesehen ist und dazu dient, die Verunreinigungen zu sammeln, wobei die Vertiefungen jeweils mit einem System zur Entfernung der Verunreinigungen ausgestattet sind.

2. Statische Filtrieranlage für Flüssigkeiten nach Anspruch 1,
**dadurch gekennzeichnet,**
**dass** jeder Rahmen (4) im wesentlichen die Form eines "U" hat, das nach oben offen ist, wobei die beiden im wesentlichen senkrechten Seiten an die Innenfläche der beiden Innen- und einander gegenüberliegenden Wände des Tanks (1) mit Hilfe einer Trägerstruktur, die zwischen diesen angeordnet ist, befestigt ist, wobei jeder Rahmen einen Querschnitt ebenfalls in der Form eines "U" hat, dessen offene Seite nach oben gerichtet ist.

3. Statische Filtrieranlage für Flüssigkeiten nach Anspruch 1 und 2,
**dadurch gekennzeichnet,**
**dass** jede Filterwand (5) über einen Eingriff in den U-förmigen Querschnitt auf den dazu gehörenden Rahmen (4) montiert ist, wobei jede Wand durch einen oder mehrere Siebfilter (7) und durch einen oder mehrere netzförmige Strukturen (8) zum Halten der Filter gebildet wird.

4. Statische Filtrieranlage für Flüssigkeiten nach den Ansprüchen 1, 2 und 3,
**dadurch gekennzeichnet,**
**dass** der Boden und die Seiten des U-förmigen Querschnitts jedes Rahmens (4) mit einer Dichtung (6) verkleidet sind, die so ausgestaltet ist, dass sie eine Dichtwirkung zwischen dem Boden und den Seiten- und Bodenkanten der jeweiligen Filterwand (5) sicherstellt.

5. Statische Filtrieranlage für Flüssigkeiten nach Anspruch 1,
**dadurch gekennzeichnet,**
**dass** die Filtriersektoren (9), die dazu dienen, die geklärte Flüssigkeit aufzunehmen, die Form einer Kammer haben, die am Boden durch eine Blindbasis (11) und seitlich durch eine Blindseite (12) und durch zwei benachbarte Filterwände (5) geschlossen ist, wobei die Blindelemente eine Verbindung zwischen den Rahmen (4) der benachbarten Filterwände bilden.

6. Statische Filtrieranlage für Flüssigkeiten nach Anspruch 1 und 5,
**dadurch gekennzeichnet,**
**dass** in jedem Filtriersektor (9) die Seite, die der Blindseite (12) gegenüberliegt, eine Öffnung (13) aufweist, die sich bis zu einem Niveau geringfügig höher als das des Bodens des Kanals (3) oder bis zum Boden selbst nach unten erstreckt und über eine Ausgabeöffnung (14), die mit Schiebern (15) versehen ist, angeschlossen ist.

7. Statische Filtrieranlage für Flüssigkeit nach Anspruch 1 und 6,
**dadurch gekennzeichnet,**
**dass** die Abgabe der filtrierten Flüssigkeit mit Hilfe von Rohren, die auf dem Boden der Rahmen angeordnet sind und mit dem Kanal (3) verbunden sind, erfolgt.

8. Statische Filtrieranlage für Flüssigkeiten nach Anspruch 1 und 2,
**dadurch gekennzeichnet,**
**dass** jeder Schieber (15) einzeln geschlossen werden kann, wenn es erforderlich ist, die Filterwände (5) des entsprechenden Filtriersektors (9) zu entfernen, ohne dass es notwendig ist die gesamte Anlage anzuhalten und damit zu verhindern, dass noch nicht geklärte Flüssigkeit in den Kanal (3) infolge des Entfernens fließt.

9. Filtrieranlage für Flüssigkeiten nach Anspruch 1,
**dadurch gekennzeichnet,**
**dass** jeder Sektor (10), der die zu klärende Flüssigkeit enthalten soll, in Richtung Boden des Tanks (11) geöffnet wird, womit sich der Schlamm auf dem Boden absetzen kann.

10. Filtrieranlage für Flüssigkeiten nach Anspruch 1,
**dadurch gekennzeichnet,**
**dass** jede Säule radialer Düsen (21) und (22) gleichzeitig auf zwei Filtrierwände (5) wirkt, wobei die Waschflüssigkeit gegen die beiden Wände selbst gesprüht wird, womit der Waschvorgang sowohl innen als auch außen und in beide Richtungen gleichzeitig erfolgen kann.

11. Statische Filtrieranlage für Flüssigkeiten nach Anspruch 1,
**dadurch gekennzeichnet,**
**dass** sie in Abhängigkeit von der Anzahl der Filtrierwände (5), die erforderlich sind, mehrere Rahmen (4) und zumindest einen weiteren Rahmen (4) aufweist, um einen Austausch und eine Reinigung zu erlauben.

12. Statische Filtrieranlage für Flüssigkeiten nach einem der vorhergehenden Ansprüche,
**dadurch gekennzeichnet,**
**dass** die Rahmen (4) auf eine beliebige Weise in bezug aufeinander angeordnet sein können, sowohl parallel als auch in unterschiedlich aufeinander zugeneigten Paaren.

13. Statische Filtrieranlage für Flüssigkeiten nach einem der vorhergehenden Ansprüche,
**dadurch gekennzeichnet,**
**dass** die Rahmen (4) in bezug auf eine senkrechte Ebene unterschiedlich positioniert sein können, und damit sowohl senkrecht als auch schräg angeordnet sein können.

14. Statische Filtrieranlage für Flüssigkeiten nach einem der vorhergehenden Ansprüche,
**dadurch gekennzeichnet,**
**dass** der Tank (1) sowohl aus Mauerwerk als auch Blech gefertigt sein kann, wobei im letzteren Fall die Kanäle (2) und (3) durch Leitungen ersetzt sind, die ebenfalls aus Blech gefertigt sind und in identischem Höhenabstand zueinander gestaffelt angeordnet sind und auf die identische Weise arbeiten.

15. Statische Filtrieranlage für Flüssigkeiten nach Anspruch 3,
**dadurch gekennzeichnet,**
**dass** jede Filtrierwand eine in senkrechter Richtung oder in bezug aufeinander variierende Porösität aufweist, um damit die Porösität selbst zu optimieren.

16. Statische Filtrieranlage für Flüssigkeiten nach Anspruch 4,
**dadurch gekennzeichnet,**
**dass** jede Filtrierwand mit einer Dichtung (6) verkleidet ist, die so ausgestaltet ist, dass sie eine Dichtwirkung gegen den jeweiligen Rahmen sicherstellt.

17. Statische Filtrieranlage für Flüssigkeiten nach Anspruch 1,
**dadurch gekennzeichnet,**
**dass** sie zumindest einen Flüssigkeitsspiegelsensor zur Steuerung der Rückwaschvorgänge aufweist, der dazu dient den einzigen Flüssigkeitsspiegel, der in dem ungeteilten Tank (1) vorliegt, zu ermitteln.

## Revendications

1. Installation statique pour la filtration des liquides, comprenant:
- un réservoir (1) pourvu d'un premier canal (2) pour la fourniture du liquide à purifier et d'un second canal (3) pour l'évacuation du liquide purifié, lesdits deux canaux étant situés sur de différents côtés du réservoir sur deux niveaux différents, le premier canal (2) étant situé sur un niveau supérieur à celui du second canal (3);
- le réservoir est divisé en une pluralité de premiers et seconds secteurs (9, 10) dans lesquels chacun des premiers secteurs (9) est formé de cadres (4) positionnés transversalement entre les surfaces internes de deux parois opposées du réservoir (1) et séparés de ce dernier par des pièces d'écartement (27), de deux parois filtrantes (5) adjacentes chacune étant montée dans un cadre et d'éléments de paroi aveugle, l'intérieur des premiers secteurs (9) contenant le liquide clarifié étant relié au canal (3) pour l'évacuation du liquide clarifié par des ouvertures (13) pourvues d'une valve à écluse (15), les seconds secteurs (10) sont reliés au canal d'alimentation (2) pour fournir le liquide à purifier aux parois filtrantes,
- deux ou plus guides rectilignes (17) parallèles entre eux et reliant les bords supérieurs de deux côtés opposés du réservoir (1), lesdits guides étant adaptés au déplacement de deux conduits (19 et 24) fixés à des chariots (18) se déplaçant sur les guides eux-mêmes;
- une pluralité de tubes (21, 25) reliés audits conduits (19, 24), chacun desdits tubes étant dirigé vers le fond des parois filtrantes (5) et du réservoir (1) et ayant une longueur substantiellement équivalente à la profondeur des cadres (4), chacun desdits tubes ayant sur toute son extension une pluralité de buses (22, 26) pour diriger le liquide de lavage vers les parois filtrantes;
- une ou plusieurs fosses (16) de type trémie ou rectilignes positionnées sur le fond du réservoir (1) au-dessous des cadres (4) et destinées à collecter les impuretés; lesdites fosses étant chacune pourvue d'un système d'évacuation desdites impuretés.

2. Installation statique pour la filtration des liquides selon la revendication 1, **caractérisée en ce que** chaque cadre (4) est substantiellement en forme de "U". ouvert vers le haut avec les deux côtés substantiellement verticaux fixés à la surface interne de deux parois internes et opposées du réservoir (1) au moyen d'une structure de support disposée entre elles; chacun desdits cadres ayant une section transversale également en forme de "U" avec le côté ouvert dirigé vers le haut.

3. Installation statique pour la filtration des liquides selon les revendications 1 et 2, **caractérisée en ce que** chacune des parois filtrantes (5) est montée sur le cadre associé (4) au moyen d'un engagement dans sa section transversale en forme de U; chacune desdites parois étant formée d'un ou plusieurs écrans filtrants (7) et par une ou plusieurs structures réticulaires (8) pour supporter les écrans eux-mêmes.

4. Installation statique pour la filtration des liquides selon les revendications 1, 2 et 3, **caractérisée en ce que** le fond et les côtés de la section transversale en forme de U de chaque cadre (4) sont garnis d'un joint (6) conçu pour assurer une action d'étanchéité entre ledit fond et les bords périphériques et latéraux des respectives parois filtrantes (5).

5. Installation statique pour la filtration des liquides selon la revendication 1, **caractérisée en ce que** chacun des secteurs filtrants (9) destiné à contenir le liquide clarifié est configuré sous la forme d'un compartiment clos sur le fond par une base aveugle (11) et latéralement par un côté aveugle (12) et par deux parois filtrantes adjacentes (5), lesdits éléments aveugles formant une connexion entre les cadres (4) desdites parois filtrantes adjacentes.

6. Installation statique pour la filtration de liquides selon les revendications 1 et 5, **caractérisée en ce que**, dans chacun des secteurs filtrants (9), le côté opposé au côté aveugle (12) présente une ouverture (13) s'étendant vers le bas jusqu'à un niveau légèrement supérieur à celui du fond du canal (3) ou jusqu'au fond lui-même et relié à ce canal au moyen d'une sortie d'évacuation (14) pourvue d'une valve à écluse (15).

7. Installation statique pour la filtration de liquides selon les revendications 1 et 6, **caractérisée en ce que** l'évacuation du liquide filtré peut être réalisée au moyen de tubes disposés sur le fond des cadres et reliés au canal (3).

8. Installation statique pour la filtration de liquides selon les revendications 1 et 6, **caractérisée en ce que** chaque valve à écluse (15) peut être fermée individuellement s'il est demandé d'enlever les parois filtrantes (5) du secteur filtrant correspondant (9), sans devoir arrêter toute l'installation et donc prévenir l'écoulement du liquide non encore clarifié dans le canal (3) lors dudit enlèvement.

9. Installation statique pour la filtration de liquides selon la revendication 1, **caractérisée en ce que** chacun des secteurs (10) devant contenir le liquide à clarifier est ouvert vers le fond du réservoir (11), permettant à la boue de précipiter sur le fond.

10. Installation statique pour la filtration de liquides selon la revendication 1, **caractérisée en ce que** chaque colonne de buses radiales (21) et (22) agit simultanément sur deux parois filtrantes (5), en vaporisant du liquide nettoyant contre les deux parois elles-mêmes, ledit nettoyage pouvant être réalisé aussi bien intérieurement qu'extérieurement et dans les deux directions dans le même temps.

11. Installation statique pour la filtration de liquides selon la revendication 1, **caractérisée en ce qu'**elle comprend une pluralité de cadres (4) dépendant du nombre de parois filtrantes (5) requises et au moins un cadre supplémentaire (4) permettant la substitution et le nettoyage.

12. Installation statique pour la filtration de liquides selon une ou plusieurs des revendications précédentes, **caractérisée en ce que** lesdits cadres (4) peuvent être positionnés de n'importe quelle manière entre eux, aussi bien parallèlement que convergents de manière variée en paires.

13. Installation statique pour la filtration de liquides selon une ou plusieurs des revendications précédentes, **caractérisée en ce que** les cadres (4) peuvent être positionnés de différentes manières par rapport à un plan vertical; ils peuvent donc être positionnés aussi bien verticalement qu'inclinés.

14. Installation statique pour la filtration de liquides selon une ou plusieurs des revendications précédentes, **caractérisée en ce que** le réservoir (1) peut être réalisé aussi bien en maçonnerie qu'en feuille de métal; dans le dernier cas, les canaux (2) et (3) seront remplacés par des conduits qui seront également réalisés en feuille de métal, étant décalés en hauteur de manière identique l'un par rapport à l'autre et fonctionnant de manière identique.

15. Installation statique pour la filtration de liquides selon la revendication 3, **caractérisée en ce que** chacune des parois filtrantes présente une porosité variée en direction verticale ou l'une par rapport à l'autre de manière à optimiser ainsi la porosité elle-même.

16. Installation statique pour la filtration de liquides selon la revendication 4, **caractérisée en ce que** chaque paroi filtrante est garnie d'un joint (6) destiné à assurer une action d'étanchéité contre le respectif cadre.

17. Installation statique pour la filtration de liquides selon la revendication 1, **caractérisée en ce qu'**elle comprend au moins un capteur de niveau pour contrôler les opérations de brassage, adapté pour la détection du niveau de liquide présent dans le réservoir non divisé (1).
